Europäisches Patentamt

European Patent Office

Office européen des brevets

(11) Veröffentlichungsnummer: **0 227 024**
**A2**

(12) **EUROPÄISCHE PATENTANMELDUNG**

(21) Anmeldenummer: 86117562.8

(22) Anmeldetag: 17.12.86

(51) Int. Cl.4: **C22B 7/02**

(30) Priorität: 20.12.85 DE 3545187

(43) Veröffentlichungstag der Anmeldung:
01.07.87 Patentblatt 87/27

(84) Benannte Vertragsstaaten:
AT BE CH DE FR GB LI NL SE

(71) Anmelder: **Lentz, Harro Prof. Dr.**
**Bergstrasse 15**
**D-5900 Siegen 21(DE)**
Anmelder: **Mihm, Ulrich Dr.**
**Am Herrnberg 1**
**D-5912 Hilchenbach(DE)**

(72) Erfinder: **Lentz, Harro Prof. Dr.**
**Bergstrasse 15**
**D-5900 Siegen 21(DE)**
Erfinder: **Mihm, Ulrich Dr.**
**Am Herrnberg 1**
**D-5912 Hilchenbach(DE)**

(54) **Verfahren zur Aufarbeitung von Staub aus der Abluftreinigung von Feuerverzinkereien.**

(57) Der Staub aus der Abluftreinigung von Feuerverzinkereien wird aufgearbeitet, indem die Komponenten des Staubes, die Zink, Ammonium oder Chlorid
enthalten, durch Aufschlämmen in Wasser oder
Altsäure oder Flußmittelbad gegebenenfalls durch
Zusatz von weiterer Säure oder von Ammoniak bzw.
Ammoniumverbindungen aufgelöst werden. Enthält
der Staub wenig Eisen, so kann er auf diese Weise
direkt zu einem Flußmittelbad aufbereitet werden. In
der Regel wird aber das Eisen nach Oxidation zu
Eisen-III-Verbindungen abgetrennt. Das kann z.B.
durch Oxidation mit Wasserstoffsuperoxid oder Luftsauerstoff aber auch durch anodische Oxidation erfolgen. Die verbleibende Lösung wird als Flußmittel
verwandt oder zu Flußmitteln weiterverarbeitet oder
aus der Lösung werden marktfähige Chemikalien in
bekannter Weise gewonnen.

EP 0 227 024 A2

## Verfahren zur Aufarbeitung von Staub aus der Abluftreinigung von Feuerverzinkereien

Die Erfindung betrifft ein Verfahren zur Aufarbeitung von Staub aus der Abluftreinigung von Feuerverzinkereien, bei dem dessen in der Verzinkerei nutzbare Komponenten gelöst und einer Wiederverwendung zugeführt werden. Im wichtigsten Anwendungsfall führt das zum Recycling des Flußmittelbades innerhalb des Betriebes.

Nach den gesetzlichen Vorschriften muß in zunehmendem Maße die Abluft in Feuerverzinkereien entstaubt werden. Der dabei anfallende Staub ist nicht deponierfähig, vor allem, da er wasserlösliche Zinkverbindungen enthält. Auch die Verbringung auf Spezialmüll-Deponien ist in vielen Fällen Einschränkungen und Verboten unterworfen. Selbst wenn die Erlaubnis zur Deponierung erteilt wird, ist sie mit einem aufwendigen und teuren Gefahrgut-Transport verbunden.

Der Erfindung liegt die Aufgabe zugrunde, den in der Abluft von Feuerverzinkereien anfallenden Staub aufzuarbeiten und die dabei erhaltenen Produkte mindestens teilweise einer sinnvollen Verwendung zuzuführen. Die gestellte Aufgabe wird gelöst durch ein Verfahren mit den kennzeichnenden Merkmalen des Anspruchs 1. In den Unteransprüchen 2 bis 5 sind Ausbildungen des Verfahrens nach Anspruch 1 angegeben.

Das Verfahren gemäß der Erfindung besteht darin, daß die nutzbaren Komponenten im Staub aus der Abluftreinigung einer Feuerverzinkerei wie Zink, Chlorid und Ammonium gelöst werden. So ein Verzinkereistaub hat beispielsweise die folgenden Analysenwerte: Zink 15-40 Gew.-%, Chlorid 25-50 Gew.-%, Eisen 0,5-3 Gew.-%, Ammonium 15-30 Gew.-%, mit Petrolether extrahierbare organische Substanzen 0,5-6 Gew.-% und weitere organische Reste und Ruß sowie Spuren von Cadmium und Blei. Die Lösung der Zinkverbindungen ist besonders in Gegenwart von Ammoniumionen über einen großen pH-Bereich möglich. Partikel von Zinkoxid und metallischem Zink lassen sich im stark sauren Medium lösen.

Das Verfahren gemäß der Erfindung ist überraschend einfach, wenn der Eisengehalt des Staubes gering ist. Dann genügt es, den Staub in saurer wässriger Lösung, z.B. in dem Flußmittelbad selbst, aufzuschläm men und zu lösen. Die Lösung muß gegebenenfalls bezüglich der Chemikalienzusammensetzung und des pH-Wertes korrigiert werden und kann dann als Flußmittelbad benutzt bzw. weiterbenutzt werden. Allerdings muß bei dieser Verfahrensweise auch der Anteil von Fett und Ruß im Staub gering sein, oder diese Bestandteile müssen entfernt werden, z.B. durch Abstreifen von der Oberfläche.

Der Eisenanteil im Staub aus der Abluftreinigung von Feuerverzinkereien reichert sich bei dieser Verfahrensvariante aber mehr und mehr im Flußmittelbad an und muß in der Regel aus dem Flußmittelbad, z.B. durch die Aufarbeitung des Bades oder einer Teilmenge desselben, entfernt werden. Eisenverbindungen führen nämlich in höherer Konzentration zu Störungen, z.B. durch Hartzinkbildung. In der Regel wird es deshalb vorteilhaft sein, aus dem Staub bei der Aufarbeitung nach dem Verfahren der Erfindung die darin enthaltenen Eisenverbindungen abzutrennen.

Für die Abtrennung des Eisens sind verschiedene Verfahren denkbar, z.B. die Anwendung von Ionenaustauschern oder die Komplexbildung und Extraktion, auch könnte durch analoge Verfahren das Zink abgetrennt werden. Schließlich kann durch elektrolytische anodische Oxidation mindestens zum Teil, also z.B. in einem Bypass, das Eisen oxidiert und ausgefällt werden. Vorzugsweise erfolgt die Abtrennung des Eisens als Eisenoxid und Eisenhydroxid aus einer Aufschlämmung des Staubes mit Wasser oder mit Altsäure -im besonderen mit zinkhaltiger Altsäure -, ggf. nach Zusatz von Oxidationsmitteln. Von diesen Eisenverbindungen sind bei einem pH-Wert größer als 1,5, vorzugsweise 2,5, die dreiwertigen Eisenverbindungen schwerlöslich und fallen aus. Bei einem pH-Wert größer als etwa 5 fallen ebenfalls die zweiwertigen Eisenverbindungen aus, während die Zinkverbindungen in dem ganzen hier angewandten pH-Bereich weitgehend in Lösung gehen. Die gegebenenfalls eingesetzten Oxidationsmittel sind vorzugsweise Wasserstoffperoxid und gasförmiger Sauerstoff z.B. aus der Luft. Als Oxidationsmittel kommen aber auch Salpetersäure, Chlor, Ozon, Natriumperoxid, Chromate, Permanganate usw. in Betracht. Durch diese Oxidationsmittel werden mindestens zum Teil auch die organischen Verunreinigungen des Staubes umgewandelt. Die ausgefallenen Eisenverbindungen können durch Dekantation oder Filtration gewonnen werden. Die so abgetrennten Eisenver bindungen werden in der Regel mit einer schwach sauren oder schwach alkalischen bzw. ammoniakalischen wässrigen Lösung gewaschen, um bisher ungelöste Zinkverbindungen zu lösen und anhaftende Zinkverbindungen abzulösen. Die gewaschenen Eisenverbindungen sind ohne Schwierigkeiten deponierbar, aber auch als Füllmasse (z.B. bei Erdarbeiten) zu verwenden. Sie können in Verhüttungsprozessen eingesetzt oder als Rohchemikalien verwandt werden. Allerdings können sich in diesem Eisenoxid Fette, Öle und Ruß befinden, falls diese Substanzen in dem aufzuarbeitenden Staub bereits enthalten waren und nicht abgetrennt oder genügend aufoxidiert worden sind.

Die verbleibende Lösung, gegebenenfalls unter Einbeziehung der angefallenen Waschwässer des Eisenniederschlages, enthält im wesentlichen Zinkchlorid und Ammoniumchlorid. Diese Lösung ist im günstigen Falle direkt als Flußmittelbad verwendbar. Oft ist aber eine Korrektur des Mischungsverhältnisses und der Wasserstoffionenkonzentration (pH-Wert) empfehlenswert.

Ein Flußmittelbad, wie es auf dem Markt angeboten wird, enthält pro Liter beispielsweise 137 g $Zn^{++}$, 303 g $Cl^-$ und 73 g $NH_4^+$ bei einer Dichte von 1,25 $g/cm^3$ (20 °C) und einem pH-Wert von 4,5. Nach dem erfindungsgemäßen Verfahren lassen sich, wie die Beispiele zeigen, mit minimalem Aufwand an Frischchemikalien Filtrate gewinnen, die den Daten des oben angegebenen Flußmittelbades entsprechen. Als Abfallchemikalie kann bei einigen Aufarbeitungsvarianten sogar Altsäure benutzt werden.

Die in der Lösung enthaltenen Verbindungen können aber auch nach bekannten Verfahren, beispielsweise durch fraktionierte Kristallisation, als Chemikalien gewonnen werden. Auch kann die Lösung eingetrocknet und die Kristallmasse als festes Flußmittel verwandt werden.

Das Verfahren der Erfindung läßt sich auch kontinuierlich anwenden. Im besonderen lassen sich die beschriebenen chemischen Umsetzungen auf eine Naßfilteranlage übertragen, wo beispielsweise durch saure Lösung sowohl der Staub als auch freier Ammoniak, der vielleicht in Zukunft nicht mehr in die Atmosphäre emittiert werden darf, zurückgehalten und nach dem Verfahren der Erfindung nutzbringend umgesetzt werden.

Die mit der Erfindung erzielten Vorteile sind:
-Der anfallende nicht deponierbare Staub aus der Abluftreinigung von Feuerverzinkereien wird einer sinnvollen Verwendung zugeführt.
-Es entfallen in der Regel teure und gefährliche Transporte, da die Aufarbeitung in einfacher Weise innerbetrieblich erfolgen kann.
-Die anfallende Lösung wird wiederverwendet, so daß es sich um ein echtes innerbetriebliches Recycling handelt, oder
-aus den anfallenden Lösungen können marktfähige Chemikalien oder festes Flußmittel gewonnen werden.
-Von besonderem Vorteil ist der Verbrauch von zinkhaltiger Altsäure bei einer Verfahrensvariante dieser Erfindung, da für die Entsorgung der Altsäure in einer Verzinkerei bekanntlich zusätzliche Kosten entstehen.
-Kontinuierliche Verfahren sind z.B. im Naßwäscher oder im Bypass möglich.

Die Erfindung wird im folgenden anhand von Beispielen, die in Testversuchen in der Praxis mehrfach erprobt wurden, näher erläutert; die dabei beschriebenen Mengenverhältnisse und Versuchsbedingungen können sich für Verzinkereistäube anderer Provenienz in für den Fachmann einsichtiger Weise ändern.

Es sind auch Kombinationen der beschriebenen Verfahrensvarianten denkbar, beispielsweise, um den pH-Wert unter Einsparung von zusätzlichen Chemikalien, beispielsweise durch Verwendung von Altsäure, einzustellen oder Zinkreste, die metallisch vorliegen, im Niederschlag zu lassen usw.


## Beispiel 1

Luftfilterstaub mit 15 Gew.-% $NH_4^+$, 37 Gew.-% $Zn^{++}$, 40 Gew.-% $Cl^-$ und nur 1 Gew.-% $Fe^{++}$ und $Fe^{+++}$ wird im einfachsten Fall mit Salzsäure und gegebenenfalls Wasser sowie gegebenenfalls Ammoniumchloridlösung zur Korrektur des Ammoniumgehaltes verrührt, bis sich bei einem pH-Wert von etwa 4,5 alles aufgelöst hat. Da der Eisengehalt bei dem hier verwandten Staub relativ gering ist, ist die so entstandene Lösung als Flußmittelbad direkt nutzbar. Bei einem Chemikalieneinsatz von 0,8 Teilen 37%iger HCl und 1 Teil $H_2O$ sowie 0,15 Teilen $NH_4Cl$ -alles bezogen auf 1 Gewichtsteil Staub -wird eine Lösung gewonnen, die weitgehend dem beschriebenen Flußmittelbad entspricht.


## Beispiel 2

70 kg des in Beispiel 1 benutzten Luftfilterstaubes werden mit 90 l Altsäure, enthaltend 22 kg $Cl^-$, 11 kg $Fe^{++}$ und 0,3 kg $Zn^{++}$ verrührt. Nach etwa 2 Stunden Reaktionszeit (bei Umgebungstemperatur) werden die etwa 150 l Suspension über eine Filterpresse abfiltriert. Dabei werden 115 l Filtrat gewonnen mit einer Dicht über 1,30 g pro $cm^3$ und einem pH-Wert von 5,3 bis 5,5. Dieses Filtrat enthält noch 2,5 kg gelöste Eisenverbindungen neben 18,5 kg $Zn^{++}$, 42,7 kg $Cl^-$ und 9,6 kg $NH_4^+$. Der Filterkuchen enthält noch 7,5 kg ungelöste Zinkverbindungen. Dieser Filterkuchen wird zerdrückt und zum Trocknen an der Luft bei Umgebungstemperatur oder erhöhter Temperatur ausgebreitet. Dabei oxidieren die Eisen-II-Verbindungen zu Eisen-III-Verbindungen. Der oxidierte Filterrückstand wird später mit 50 l Wasser angeteigt. Unter Rühren wird mit 16 % HCl ein pH-Wert von 2,5 eingestellt. Dadurch werden die Zinkverbindungen gelöst, während die Eisen-III-Verbindungen ungelöst bleiben. Durch erneutes Abpressen auf der Filterpresse unter Nachwaschen mit wenig $NH_4$-

haltigem Wasser wird ein praktisch zinkfreier Kuchen erhalten und 70 l eines Filtrates mit 7,4 kg $Zn^{++}$. Beide Filtrate werden vereinigt, die noch gelösten Eisen-II-Verbindungen werden mit wenig $H_2O_2$ oxidiert, gefällt und abgetrennt. Die gereinigten, vereinigten Filtrate entsprechen in den Eigenschaften weitgehend dem bereits genannten Flußmittelbad. In diesem Beispiel ist der Chemikalieneinsatz minimal, hingegen ist der technische Aufwand erhöht, z.B. durch die notwendigen zwei Filterungen.

## Beispiel 3

Luftfilterstaub und Altsäure werden gem. Beispiel 1 aufgeschlämmt. Zur Oxidation wird sofort ein Oxidationsmittel z.B. Wasserstoffperoxid zugesetzt. Der pH-Wert gegebenenfalls auf etwa 4,5 korrigiert. Dabei oxidieren Eisen-II-Verbindungen zu Eisen-III-Verbindungen, die ausfallen und abfiltriert werden. Die verbleibenden Zinkverbindungen werden durch eine saure Wäsche aus dem Filterkuchen entfernt. Die Filtrate werden wie in Beispiel 1 und 2 gegebenenfalls nach einer Korrektur der Zusammensetzung und des pH-Wertes als Flußmittelbad ver wendet.

## Beispiel 4

1 Masseneinheit des Staubes aus der Luftfilteranlage einer Feuerverzinkerei wird mit 1,5 Masseneinheiten Wasser aufgeschlämmt und mit ca. 0,25 Masseneinheit 25%iger Ammoniaklösung schwach alkalisch gemacht. Dabei wird vorzugsweise ein pH-Wert zwischen 7,5 und 8 eingestellt. Zur Oxidation des Eisens wird mit 1/40 Masseneinheit 30%iger Wasserstoffperoxidlösung versetzt. Der Reaktionsverlauf kann durch die Messung des Redoxpotentials kontrolliert werden, welches zum Schluß der Reaktion etwa +0,2 V betragen sollte. Wird die Umsetzung bei Umgebungstemperatur durchgeführt, so muß das Wasserstoffperoxid am besten langsam (etwa innerhalb 1 Std.) zugegeben werden, um starke Schaumbildung zu vermeiden. Bei 60 °C kann die Zugabe innerhalb von 5 Minuten erfolgen. Nach Stehen über Nacht hat sich eine Schlammschicht von etwa dem halben Gesamtvolumen unter einer klaren Lösung abgesetzt. Diese Lösung wird dekantiert oder filtriert. Der Schlamm wird mit ammoniakhaltigem (etwa 1 % $NH_3$) oder mit schwach salzsaurem Wasser gewaschen. Dabei wird eine Menge an Waschlösung benutzt, die etwa dem dreifachen Volumen des Schlammrückstandes entspricht. Der Zinkgehalt des Waschwassers läßt sich mit Teststäbchen - (Firma Merck) leicht kontrollieren. Der eisenhaltige Rückstand enthält kein oder nur noch Spuren Zink. Er ist damit problemlos deponierbar oder in Verhüttungsprozessen oder als Rohchemikalie verwendbar. Die Konzentration der von Eisenverbindungen befreiten Lösung wird beispielsweise bezüglich ihres Zinkgehaltes kontrolliert. Durch Zusatz entweder von Zinkchlorid oder von Ammoniumchlorid wird die Konzentration des im Betrieb der Feuerverzinkerei gebrauchten Flußmittels eingestellt. Außerdem wird die Wasserstoffionenkonzentration auf den gewünschten Wert gebracht, etwa durch Zusatz von Salzsäure. Die so behandelte Lösung läßt sich zur Ergänzung des benutzten Flußmittelbades verwenden. Es ist aber auch möglich, die erhaltene klare Lösung beispielsweise durch fraktionierte Kristallisation auf Chemikalien hin aufzuarbeiten.

## Beispiel 5

Bei dieser Verfahrensvariante erfolgt die Oxidation durch gasförmigen Sauerstoff. Dazu wird Luft bei vorzugsweise 60 °C und einem pH-Wert von etwa 7,5 -8 durch die aufgeschlämmte Lösung gepreßt. Die Oxidation ist nach etwa einer halben Stunde beendet. Die Aufarbeitung erfolgte im übrigen gem. Beispiel 4. Es wurden in geringer Menge Schwefelwasserstoff-, Phosphorwasserstoff- und Arsenwasserstoff-Verbindungen freigesetzt, die riechbar waren.

## Beispiel 6

Staub wird mit Altsäure aufgeschlämmt und ein pH von etwa 4,5 eingestellt. Aus dieser Lösung wird über Elektroden, z.B. aus Graphit, bei Spannungen zwischen 0,5 und 2 Volt ein Teil des Eisens zu Eisen-III oxidiert und fällt aus. So läßt sich z.B. in einem Bypass das Eisen in der Lösung abreichern.

**Ansprüche**

1. Verfahren zur Aufarbeitung von Verzinkereistaub aus der Abluftreinigung enthaltend Zink, Eisen und Ammonium als Chlorid, Oxichlorid oder Oxid und übliche Verunreinigungen, dadurch gekennzeichnet, daß

a) der Staub in Wasser oder in Altsäure oder im Flußmittelbad aufgeschlämmt wird, und sich die Verbindungen, die Zink oder Ammonium oder Chlorid enthalten, weitgehend auflösen,

b) nicht gelöste Zinkverbindungen durch Zusatz weiterer Säuren oder durch Zusatz von Ammoniak oder Ammoniumverbindungen aufgelöst werden,

c) die verbleibende Lösung als Flußmittel verwandt oder zu Flußmitteln weiterverarbeitet wird oder aus der Lösung marktfähige Chemikalien in bekannter Weise gewonnen werden.

2. Verfahren nach Anspruch 1, dadurch gekennzeichnet, daß der Staub bei geringem Eisengehalt direkt zu einem Flußmittelbad aufbereitet wird.

3. Verfahren nach Anspruch 1, dadurch gekennzeichnet, daß das Eisen durch Oxidation in Eisen-III-Verbindungen überführt und abgetrennt wird.

4. Verfahren nach Anspruch 1 und 3, dadurch gekennzeichnet, daß als Oxidationsmittel Wasserstoffsuperoxid oder Luftsauerstoff verwandt wird.

5. Verfahren nach Anspruch 1 und 3, dadurch gekennzeichnet, daß die Oxidation des Eisens in der Lösung an der Anode elektrolytisch erfolgt.